# EUROPÄISCHE PATENTSCHRIFT

(11) **EP 4 077 077 B1**
(45) Veröffentlichungstag und Bekanntmachung des Hinweises auf die Patenterteilung: **27.12.2023**
(21) Anmeldenummer: 20817278.3
(22) Anmeldetag: 01.12.2020
(51) Int. Cl.: B60T 8/172, B60T 8/1755, B60W 20/00

(54) **VERFAHREN UND VORRICHTUNG ZUR SCHLUPFREGELUNG EINES FAHRZEUGRADES**
METHOD AND SYSTEM FOR CONTROLLING THE SLIP CONTROL OF A VEHICLE WHEEL
MÉTHODE ET SYSTÈME DE RÉGULATION DU GLISSEMENT RELATIF D'UNE ROUE DE VÉHICULE

(30) Priorität: 19.12.2019 DE 102019135087
(43) Veröffentlichungstag der Anmeldung: 26.10.2022
(73) Patentinhaber: ZF CV Systems Global GmbH, 3006 Bern (CH)
(72) Erfinder: BENSCH, Uwe, 30161 Hannover (DE); DIECKMANN, Thomas, 30982 Pattensen (DE); HESEDING, Johannes, 30169 Hannover (DE); MORITZ, Christoph, 30455 Hannover (DE); SCHÜNEMANN, Gerd, 30880 Laatzen (DE)
(74) Vertreter: Ohlendorf, Henrike
(86) Internationale Anmeldenummer: PCT/EP2020/084047
(87) Internationale Veröffentlichungsnummer: WO 2021/121951

(56) Entgegenhaltungen:
- WO-A1-2011/083004
- DE-A1-102010 003 076
- DE-A1-102013 226 894

## Beschreibung

Die Erfindung betrifft ein Verfahren und eine Vorrichtung zur Schlupfregelung eines über einen elektrischen Antrieb angetriebenen Fahrzeugrades.

Elektrisch angetriebene Fahrzeuge mit einem direkt auf die einzelnen Räder wirkenden elektrischen Antrieb ermöglichen eine individuelle Ansteuerung der einzelnen Fahrzeugräder, der auch als Wheel-Drive bezeichnet wird. Über den elektrischen Antrieb kann eine Radbremsung mit Rekuperation bzw. Rückgewinnung der kinetischen Energie als elektrische Energie erfolgen. Der elektrische Antrieb kann hierbei unmittelbar oder durch ein Getriebe auf das Rad wirken. Weiterhin ist im Allgemeinen eine Reibbremse vorgesehen, die bei Nutzfahrzeugen als pneumatische Bremse ausgebildet ist.

Instabilitäten können insbesondere auftreten, wenn in einer Fahrsituation größere Längs- und Querkräfte übertragen werden sollen, als es der Reibwert zwischen Reifen und Straße zulässt. Bei einer Bremsung wird im Allgemeinen ein ABS-Eingriff an dem Rad durchgeführt, bei dem eine Blockierneigung erkannt wird, so dass durch geeignete Ansteuerung der Reibbremse unter Berücksichtigung eines maximal zulässigen Schlupfwertes ein Blockieren des Rades verhindert wird. Somit kann die radindividuelle Bremskraft angepasst und der Radschlupf auf einen geeigneten Schlupfwert geregelt werden, bei eine maximale Kraft zwischen Rad und Straße übertragen werden kann. Durch ein derartiges Verfahren wird somit die Lenkfähigkeit, d. h. Übertragung einer Querkraft, aufrechterhalten.

Bei Systemen mit radindividuell wirkenden elektrischen Antrieben und ergänzenden Reibbremsen ergeben sich jedoch Probleme. So kann das generatorische Bremsmoment des elektrischen Antriebs, d. h. die Rekuperation, zu einer Blockierneigung des Rades führen. Bei Feststellen einer derartigen Blockierneigung wird im Allgemeinen die Energierückgewinnung abgeschaltet und der allein über die Reibbremse wirkende ABS-Regelmechanismus durchgeführt, um die Fahrstabilität zu sichern.

Ein derartiges Umschalten zwischen Systemen ist im Allgemeinen aufwendig und weiterhin energetisch nicht optimal. Bei dem ABS-Regelverfahren werden dann die Möglichkeiten der elektrischen Antriebe zur schnellen Ausbildung von positiven und negativen Drehmomenten nicht genutzt.

Die DE 10 2017 211 436 A1 beschreibt ein Verfahren und eine Vorrichtung zum Ansteuern eines Elektromotors für ein Fahrzeug, bei dem ein eine Solldrehzahl des Elektromotors repräsentierender Solldrehzahlwert um einen Drehzahlschritt verändert wird und das von dem Elektromotor hierdurch bereitgestellte Drehmoment erfasst wird. Hierdurch können jedoch insbesondere Probleme bei der Seitenführung auftreten; weiterhin werden hierdurch gegebenenfalls Radgeschwindigkeiten eingestellt, die nicht an das Geschwindigkeitsniveau angepasst sind.

Die DE 10 2011 100 814 A1 betrifft eine Einrichtung zur Antriebsschlupfregelung für ein Fahrzeug mit elektromotorischem Fahrzeugantrieb, bei dem die elektrischen Antriebsmotoren der Räder jeweils von einem steuerbaren Umrichter gespeist werden, wobei zur Drehzahlsteuerung ein ASR-Steuergerät jedem Umrichter die maximal zulässige Drehzahl des betreffenden Antriebsmotors mitteilt. Eine solche Regelung kann somit insbesondere einen Antriebsschlupf begrenzen.

In der DE 10 2014 210 537 A1 ist ein Verfahren zum Betreiben eines Hybridfahrzeugs mit Brennkraftmaschine und elektrischer Maschine beschrieben, wobei die elektrische Maschine in einem generatorischen Betriebsmodus betrieben werden kann und Sicherheitsmaßnahmen unter Erhöhung oder Reduzierung des Radantriebs durchgeführt werden können. Hierbei ist ein Modus zur Konstanthaltung der Summe aus den Antriebsmomenten beider Antriebe vorgesehen.

Die DE 10 2010 003 076 A1 beschreibt ein Verfahren und System zur Regelung eines Radbremsschlupfes für ein Fahrzeug mit Elektroantrieb, bei dem ein Bremssignal von einer Schlupfregeleinrichtung erfasst wird und daraufhin eine Elektroantriebsregeleinrichtung und eine Reibungsbremsregeleinrichtung angesteuert werden. Somit kann ein regeneratives Bremsen unter Berücksichtigung des Radschlupfes durchgeführt werden.

In der JP 2018018697 A wird ein ABS für ein vierrädriges Elektrofahrzeug mit einer Schlupfregelung beschrieben.

Die US 2004/0176899 A zeigt eine Steuerung der auf eine Vielzahl von Rädern eines Motorfahrzeugs ausgeübten Drehmomente, wobei Drehzahlsensoren und ein Gierraten-Beschleunigungssensor vorgesehen sind. Hierbei werden unter anderem die erforderlichen, an die jeweiligen Räder auszuübenden Drehmomente an lateral gegenüberliegenden Seiten des Fahrzeugs bestimmt, um den Radschlupf zu regulieren und ein Korrektur-Moment um die Gierachse des Fahrzeuges zu erzeugen. Weiterhin können vom Fahrer angestrebte Soll-Werte für die Regelung berücksichtigt werden.

In der EP 1 849 745 B1 ist eine Steuerung für Bremskräfte und Antriebskräfte eines Fahrzeugs vorgesehen, bei dem der Fahrerwunsch aufgenommen wird und eine Sollbrems-/Antriebskraft und ein Soll-Giermoment ermittelt werden, die über die Brems-/Antriebskräfte, die auf die Reifen auszuüben sind, erzeugt werden sollen. Hierzu ist ein Gierraten-Sensor vorgesehen.

Die EP 2 612 716 B1 beschreibt eine Bremskraftsteuereinrichtung für ein Fahrzeug mit einem Elektrokraft-Erzeugungsmechanismus, der eine elektromagnetische Antriebskraft oder Bremskraft auf ein Rad aufbringen kann, wobei zusätzlich ein Bremskrafterzeugungsmechanismus zur Ausführung mechanischer Bremskräfte vorgesehen ist. Weiterhin ist eine Straßenoberflächenzustands-Erfassungseinrichtung vorgesehen, wobei auf Grundlage der erfassten Daten eine Blockiertendenz der Räder ermittelt wird.

Die WO 2011/083004 A1 beschreibt ein Verfahren, in dem eine Fahrdynamik eines Kraftfahrzeugs mit einem elektrischen Antrieb beeinflusst wird, wobei ein fahrerunabhängiger Bremseingriff ein Giermoment erzeugt und eine fahrerunabhängige Erhöhung eines Antriebsmoments an mindestens einem Rad hervorgerufen wird, um eine Bremsverzögerung des Kraftfahrzeugs zumindest teilweise zu kompensieren. Dabei wird ein Bremseingriff angefordert, wenn ein Verhältnis aus einem momentan genutzten Reibwert und einem möglichen ausnutzbaren Reibwert einen vorgegebenen Schwellenwert überschreitet. Ein Betrag eines angeforderten Bremsmoments wird reduziert, wenn ein Antriebsschlupf eines kurvenäußeren Rads einen vorgegebenen Schwellwert überschreitet. Ein zusätzliches Antriebsmoment wird durch ein Minimum aus einem angeforderten Bremsmoment und einem tatsächlich aufgebauten Bremsmoment begrenzt. Die fahrerunabhängige Erhöhung des Antriebsmoments findet nur statt, wenn ein Fahrer ein Antriebsmoment anfordert und keine Fahrstabilitäts- oder Schlupfregelung eine Begrenzung des Antriebsmoments erfordert.

Die DE 10 2013 226 894 A1 beschreibt ein Verfahren für eine radindividuelle Modulation eines Bremsdrucks an einem Kraftfahrzeug mit einem elektrischen Antrieb, bei dem nach Erkennung einer vorhandenen oder bevorstehenden Instabilität an einem auf einer Fahrzeugseite angeordneten Rad an einem oder mehreren Rädern auf einer gegenüberliegenden Fahrzeugseite auch dann eine Bremsdruckbeeinflussung durchgeführt wird, wenn dieses Rad keinen übermäßigen Schlupf aufweist.

Derartige Verfahren und Systeme ermöglichen zunächst im Allgemeinen eine Längsregelung des Radschlupfes; hierbei wird jedoch die Seitenführung im Allgemeinen nicht oder nur wenig berücksichtigt. Auch sind die Verfahren zum Teil recht aufwendig oder erfordern zusätzliche Sensoren, die nicht in jedem Fahrzeug zur Verfügung stehen.

Der Erfindung liegt die Aufgabe zugrunde, ein Verfahren und eine Vorrichtung zur Schlupfregelung eines über einen elektrischen Antrieb angetriebenen Fahrzeugrades zu schaffen, die eine sichere Stabilisierung des Fahrzeugs bei guter Steuerbarkeit des Fahrzeugs ermöglichen.

Diese Aufgabe wird durch ein in dem beigefügten unabhängigen Anspruch 1 definiertes Verfahren und eine in dem beigefügten Anspruch 21 definierte Vorrichtung gelöst. Die Unteransprüche beschreiben bevorzugte Weiterbildungen. Weiterhin ist ein Fahrzeug mit der erfindungsgemäßen Vorrichtung vorgesehen.

Die erfindungsgemäße Vorrichtung zur Schlupfregelung dient insbesondere zur Durchführung des erfindungsgemäßen Verfahrens; das erfindungsgemäße Verfahren zur Schlupfregelung kann insbesondere mit der erfindungsgemäßen Vorrichtung durchgeführt werden.

Erfindungsgemäß wird somit über einen auf das jeweilige Fahrzeugrad wirkenden elektrischen Antrieb in einem Moment-Steuerungsschritt eine Moment-Steuerung durchgeführt und es werden Ist-Antriebsmomente bzw. Kräfte eingesteuert, die sowohl beschleunigend als auch bremsend wirken können. Hierbei wird ein Radschlupf des jeweiligen Fahrzeugrades ermittelt und überprüft, ob eine Instabilität vorliegt. Bei Feststellen einer Instabilität des Fahrzeugrades wird vorteilhafterweise eine Schlupfregelung des Radschlupfs auf einen Soll-Schlupf des Fahrzeugrades durchgeführt, bzw. es wird eine Drehzahlregelung des elektrischen Antriebs auf diesen Soll-Schlupf durchgeführt, da eine derartige Schlupfregelung bzw. Drehzahlregelung insbesondere zum einen eine hohe Übertragung der Längskräfte, insbesondere der zur Abbremsung führenden Längskräfte, ermöglicht und weiterhin eine geeignete Querkraftübertragung sicherstellt.

Hierbei wird das von dem elektrischen Antrieb auf das Fahrzeugrad übertragene Ist-Antriebsmoment, das beschleunigend oder bremsend sein kann, ermittelt und mit einem End-Kriterium bewertet. Wenn das End-Kriterium bzw. Beendigungs-Kriterium erfüllt ist, wird die überlagerte Drehzahlregelung bzw. Schlupfregelung des elektrischen Antriebs beendet.

Somit wird vorteilhafterweise eine Regelung ohne Einsatz der Reibbremse angestrebt; somit kann insbesondere auch einer Energierekuperation Vorrang eingeräumt werden. Der elektrische Antrieb kann somit bei Ausübung eines negativen Ist-Antriebsmomentes direkt elektrische Energie erzeugen und dem Fahrzeug bzw. einem Speicher wieder zuführen.

Vor dem Moment-Steuerungsschritt kann ein Soll-Antriebsmoment-Ermittlungsschritt vorgesehen sein, in dem ein Soll-Antriebsmoment ermittelt wird, insbesondere in Abhängigkeit einer Fahrer-Eingabe, und in dem Moment-Steuerungsschritt kann bei der Ansteuerung des elektrischen Antriebs des Fahrzeugrades das ausgeübte Ist-Antriebs-Moment gemessen und auf das Soll-Antriebsmoment eingestellt und/oder eingeregelt wird.

Dies ermöglicht somit eine geeignete Ermittlung und Einstellung des Ist-Soll-Antriebsmomentes.

Erfindungsgemäß können trotz der bei der Bremsung bzw. Nutz-Bremsung ermöglichten Rekuperation Instabilitäten sicher erkannt werden. Hierbei kann als Instabilitäts-Kriterium insbesondere ein ermittelter Radschlupf des jeweiligen Fahrzeugrades mit einem Grenzschlupf bzw. einer Schlupfschwelle, z. B. 7 %, verglichen werden. Die Ermittlung des Radschlupfes erfolgt z.B. in üblicher Weise mittels Drehzahlsensoren zur Ermittlung der aktuellen Drehzahl unter Vergleich mit einer Referenzgeschwindigkeit des Rades, die als lokale Geschwindigkeit der Radnabe über dem Grund direkt ermittelt bzw. aus einem ergänzend vorgesehenen ABS oder ESC-System als Referenzgeschwindigkeit oder ABS- bzw.- ESC-Referenzgeschwindigkeit entnommen werden kann. Bei Erfüllen des Instabilitäts-Kriteriums wird somit die überlagerte Drehzahlregelung des elektrischen Antriebs begonnen und die Drehzahl des elektrischen Antriebs somit auf einen Soll-Schlupf, z. B. 15 %, eingeregelt.

Die Auswahl des Soll-Schlupfes kann aufgrund eines Auswahl-Kriteriums oder mehrerer Auswahl-Kriterien erfolgen; vorteilhafterweise wird die maximale oder hohe Übertragung der Längskräfte und eine geeignete Übertragung von Querkräften ermittelt. Hierbei können ergänzende Kriterien berücksichtigt werden. Eine Ermittlung kann insbesondere aus zur Verfügung stehenden Modellen zur Längskraft- und Querkraft-Übertragung eines Rades in Abhängigkeit des Radschlupfes, gegebenenfalls unter Berücksichtigung weiterer Parameter wie Schräglaufwinkel usw., herangezogen werden.

Somit wird bereits der erfindungsgemäße Vorteil erreicht, während der Instabilitäts-Regelung eine geeignete Querkraft-Übertragung zu ermöglichen. Somit wird insbesondere die Seitenführung des Fahrzeugs sichergestellt, sodass auch Kurvenführungen weiter ermöglicht sind. Anders als bei den eingangs genannten Systemen hat somit vorzugsweise der Erhalt der Lenkbarkeit Vorrang vor der Verkürzung des Bremswegs;
hierbei kann insbesondere auch einer Längsregelung ohne Berücksichtigung der Querkraft-Übertragung kein Vorrang eingeräumt werden

Indem das Beendigung-Kriterium zur Beendigung der überlagerten Drehzahlregelung in Abhängigkeit des ermittelten übertragenen Ist-Antriebsmomentes ausgebildet ist, kann somit bei der Beendigung der Regelung kein instabiler Zustand auftreten. Da bei der Instabilitäts-Regelung eine Drehzahl-Regelung bzw. Schlupfregelung des Antriebs erfolgt, kann somit der aktuelle Radschlupf nicht als Beendigungs-Kriterium herangezogen werden, da er durch die Regelung eingestellt wird. Daher wird das Beendigungs-Kriterium vorzugsweise in Abhängigkeit des übertragenen Ist-Antriebsmomentes ausgewählt. Hierbei wird erkannt, dass durch den Vergleich des Ist-Antriebs- Momentes mit einem Soll-Antriebsmoment sichergestellt werden kann, dass bei der Beendigung der überlagerten Drehzahl-Regelung kein instabiler Umstand vorliegt, sondern der gerade aktuelle Schlupfwert eine hinreichende Stabilität gewährleistet.

Somit wird erfindungsgemäß der Längsschlupf auf einen Maximalwert begrenzt und der Querkraft und Lenkfähigkeit gegenüber der Bremskraft zumindest in den Fällen Vorrang einräumt, in denen dieses vorteilhaft ist.

Der Grenzschlupf zur Bewertung der Instabilität ist vorteilhafterweise geringer als der einzuregelnde Soll-Schlupf, sodass die überlagerte Drehzahl-Regelung rechtzeitig begonnen wird.

Erfindungsgemäß können somit Ist-Antriebsmomente in beide Richtungen eingeregelt werden. Somit ist zum einen eine Blockier-Regelung während eines Bremsvorgangs, und weiterhin eine Antriebsschlupf-Regelung möglich. Die Vergleiche der Schlupfwerte und des Ist-Antriebsmomentes mit dem jeweiligen Grenzwerten oder Vergleichswerten wird somit insbesondere auf Grundlage des Betrags der Werte, d. h. ohne Vorzeichen, durchgeführt.

Gemäß einer Ausbildung kann mehr als ein Grenzschlupf vorgesehen sein. So kann bei Erkennung einer Instabilität zunächst bei Überschreiten eines unteren Grenzschlupfs des Radschlupfes ein Übergang auf eine Drehzahlregelung des Fahrzeugrades erfolgen und
bei Überschreiten eines oberen Grenzschlupfs ein Übergang auf die Schlupfregelung des Fahrzeugrades erfolgen, bei der der Radschlupf auf den Soll-Schlupf geregelt wird, d.h. insbesondere als überlagerter Schlupfregel-Schritt.

Hierdurch wird ein verbesserter Übergang von der Moment-Steuerung oder Moment-Regelung des Antriebsmomentes auf die Schlupfregelung ermöglicht, d.h. insbesondere auch mit dazwischen vorgesehener Drehzahlregelung des Fahrzeugrades, wobei die Drehzahlregelung somit auch eine Radgeschwindigkeitsregelung des Fahrzeugrades darstellt.

Bei Erfüllen des Beendigungs-Kriteriums kann das Verfahren insbesondere zurückgesetzt werden, d. h. es wird wiederum der Schritt der Ansteuerung des elektrischen Antriebs des Fahrzeugrades gemäß der Ist-Antriebsmoment-Steuerung oder der unterlagerten Ist-Antriebsmoment-Regelung durchgeführt.

Das aktuell übertragene oder eingegebene Ist-Antriebsmoment kann insbesondere durch Messung des von einer Ansteuerschaltung eingespeisten Motorstroms erfolgen; hierbei kann im Allgemeinen vorteilhafterweise angesetzt werden, dass der - z. B. von Gleichrichtern - zur Verfügung gestellte Motorstrom proportional dem eingespeisten oder übertragenen Ist-Antriebsmoment ist. Somit ist mit geringem Aufwand eine Ermittlung des übertragenen Ist-Antriebsmomentes möglich, wobei die hierfür erforderlichen Werte dem System im Allgemeinen bereits zur Verfügung stehen.

Ein wesentlicher Vorteil des erfindungsgemäßen Verfahrens und der erfindungsgemäßen Vorrichtung liegt darin, dass somit eine Sicherstellung eine Querkraftführung auch ohne ergänzende Sensoren wie z. B. Gierratensensor oder Querbeschleunigungssensor möglich ist. Es kann auf Grundlage z. B. eines Modells zur Längskraftführung und Seitenkraftführung ein geeigneter Soll-Schlupf für die überlagerte Drehzahl-Regelung angesetzt werden, der mit hoher Genauigkeit die geeignete Längskraftführung und Querkraftführung ermöglicht.

Der Einsatz einer Reibungsbremse kann sekundär vorgesehen sein, wobei diese z. B. lediglich bei Erkennen eines erforderlichen Eingriffs, z. B. für die Ausführung eines entsprechen hohen Brems-Momentes vorgesehen ist. Ansonsten kann eine Blockierschutz-Regelung oder ABS-Regelung primär durch das erfindungsgemäße Verfahren unter Ansteuerung des elektrischen Antriebs erfolgen.

Der elektrische Antrieb kann insbesondere ein Radnabenmotor sein, der somit radindividuell die Einsteuerung eines geeigneten Ist-Antriebsmomentes ermöglicht. Der elektrische Antrieb kann grundsätzlich mit oder ohne Getriebe vorgesehen sein.

Anstelle von Raddrehzahlsensoren des ABS kann auch die Drehzahl der elektrischen Maschine, d. h. ein zur Verfügung gestelltes Gebersignal, verwendet werden. Wenn die Elektromaschine über ein Getriebe auf das Rad einwirkt, kann die jeweilige Getriebeübersetzung zur Berechnung der Raddrehzahl herangezogen werden.

Gemäß einer Weiterbildung der Erfindung kann nach der initialen Einstellung des Soll-Schlupfes bei der Drehzahl-Regelung der Soll-Schlupf-Wert um diesen Zielwert herum in z. B. inkrementellen Schritten variiert werden. Somit kann die durch der Drehzahl-Regelung des elektrischen Antriebs unterlagerte Drehmoment-Regelung oder Drehmoment-Einstellung die daraus folgende Drehmoment-Änderung des elektrischen Antriebs messen. So kann z. B. der zunächst vorgesehene und als optimal bewertete Soll-Schlupf von z. B. 15 % additiv in Richtung z. B. höherer übertragener Drehmomente bzw. Radkräfte verändert werden. Hierbei kann vorteilhafterweise eine obere Schlupfgrenze zur Begrenzung dieser Variation vorgesehen sein, die nicht überschritten werden darf, z. B. mit einem oberen Grenzschlupf (Radschlupf-Grenzwert) von 22 %.

Die Erfindung wird im Folgenden anhand der beiliegenden Zeichnungen an einigen Ausführungsformen näher erläutert. Es zeigen:
- Fig. 1: ein Fahrzeug mit einer Vorrichtung bzw. Antriebssteuerung gemäß einer Ausführungsform der Erfindung;
- Fig. 2: ein Fahrzeug mit einer Vorrichtung gemäß einer weiteren Ausführungsform;
- Fig. 3: eine Darstellung der Reifenlängskraft und Reifenquerkraft in Abhängigkeit des Radschlupfes in verschiedenen Fahrsituationen;
- Fig. 4: ein Flussdiagramm eines erfindungsgemäßen Verfahrens.

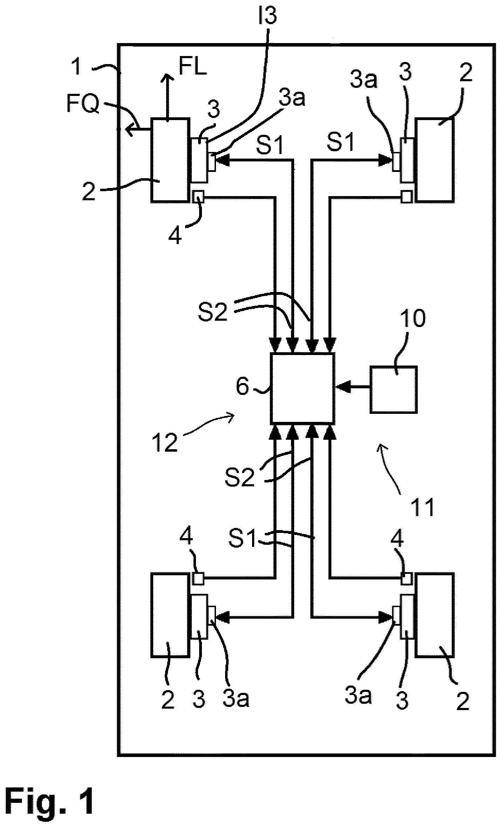

Ein Fahrzeug 1 weist gemäß Figur 1 vier Räder 2 auf, die jeweils über einen elektrischen Radnabenmotor 3 angetrieben werden. Grundsätzlich kann das jeweilige Fahrzeugrad 2 wie gezeigt direkt über einen Motor, oder auch indirekt über ein Getriebe von einem Motor angesteuert werden. Die Raddrehzahlen der einzelnen Räder 2 werden jeweils über - aktive oder passive - Raddrehzahlsensoren 4 gemessen, die Drehzahl-Signale n ausgeben. Gemäß der grundsätzlich vereinfachten Darstellung der Figur 1 ist eine Antriebs-Steuereinrichtung 6 vorgesehen, die die einzelnen Radnabenmotoren 3 über Antriebs-Steuersignale S1 ansteuert. Die Radnabenmotoren 3 ermöglichen zum einen einen Antrieb der einzelnen Fahrzeugräder 2 und weiterhin eine Rekuperation, d. h. eine Rückgewinnung der kinetischen Energie beim Bremsen der Fahrzeugräder 2.

Die Ansteuereinrichtung 3a des Radnabenmotors 3 ermittelt das tatsächlich ausgegebene Ist-Antriebsmoment M2; so kann z. B. angesetzt werden, dass die dem Radnabenmotor 3 zugeführte Stromstärke I3 dem ausgeübten Ist-Antriebsmoment M2 proportional ist. Somit gibt jede Ansteuereinrichtung 3a Informationssignale S2 über das auf das jeweilige Fahrzeugrad 2 ausgeübte Ist-Antriebsmoment M2 an die zentrale Antriebs-Steuereinrichtung 6. Das Ist-Antriebsmoment M2 ist hierbei positiv, wenn es zur Beschleunigung des Fahrzeugrades 2 dient, und negativ, wenn es zum Bremsen des Fahrzeugrades 2, insbesondere mittels Rekuperation, dient.

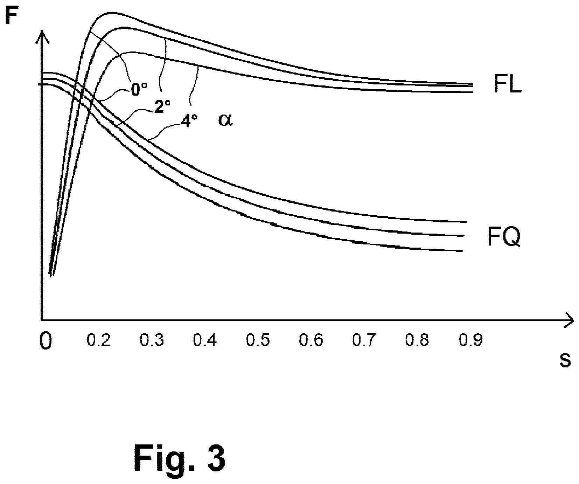

Die von einem Fahrzeugrad 2 in Längsrichtung des Fahrzeugs übertragene Reifenlängskraft FL und die in Querrichtung des Reifens 2 übertragene Reifenquerkraft FQ hängen von dem jeweiligen Radschlupf s ab, sowie z. B. einem Schräglaufwinkel α. Der Radschlupf s hängt wiederum insbesondere von dem Reibwert µ der Straße bzw. des Untergrundes ab. Figur 3 zeigt eine entsprechende Modellbildung, wonach die beiden Kräfte FL und FQ in Abhängigkeit des Radschlupfes s dargestellt sind und die Kurven mit dem Schräglaufwinkel α variieren.

Hierbei kann der Radschlupf s als Verhältnis der Radgeschwindigkeit, d. h. Radumfangsgeschwindigkeit v2 gegenüber der Fahrzeuggeschwindigkeit v1 ermittelt werden, da bei reiner Haftreibung ohne Radschlupf die Radgeschwindigkeit (Radumfangsgeschwindigkeit) v2 mit der Fahrzeuggeschwindigkeit v1 bei Geradeausfahrten übereinstimmt.

Gemäß Figur 3 tritt bei Übertragung einer Reifenlängskraft FL immer ein gewisser Radschlupf s auf, so dass die Kurve von FL mit steigendem Radschlupf zunächst ansteigt, und - gegebenenfalls in Abhängigkeit des Schräglaufwinkels α - nachfolgend mit höherem Wert des Radschlupfes s abfällt, wobei bei höherem Radschlupf entsprechend insbesondere auch ein Blockieren des Fahrzeugrades 2 auftreten kann. Die Reifenquerkraft FQ nimmt hingegen mit steigendem Radschlupf s ab.

Die oben genannten Überlegungen sind grundsätzlich sowohl bei einem Bremsvorgang als auch Beschleunigungsvorgang anzusetzen, wobei beim Bremsvorgang ein Blockieren der gebremsten Räder auftreten kann, und beim Antriebsvorgang ein Durchdrehen der Räder.

Erfindungsgemäß wird angestrebt, das Fahrzeugrad 2 über die Antriebseinrichtung, d. h. hier den Radnabenmotor 3, in einem Bereich einzuregeln, bei dem sowohl eine Reifenlängskraft FL als auch eine hinreichende Reifenquerkraft FQ ausgeübt werden kann, um somit eine geeignete Kurvenführung bzw. Querführung des Fahrzeuges 1 zu erreichen.

Während der Fahrt überprüft die Antriebs-Steuereinrichtung 6 den Radschlupf s der einzelnen Fahrzeugräder 2 auf Grundlage der jeweiligen Raddrehzahlsignale n sowie einer Referenzgeschwindigkeit v1-ref des Fahrzeugs 1 oder einer Referenzgeschwindigkeit des Fahrzeugrades v2ref, die grundsätzlich aus einer Modellbildung berechnet werden können, wie es bei Antiblockiersystemen (ABS) üblich ist.

Eine Instabilität kann z. B. durch Vergleich des Radschlupfes s mit mindestens einer Schlupfschwelle s-thr erfolgen, d. h. mit dem Instabilitäts-Kriterium k1: s > s-thr, z. B. mit s-thr = 7 % bzw. s-thr = 0,07.

Bei Erkennen einer Instabilität gemäß dem Instabilitäts-Kriterium k1 erfolgt eine Drehzahlregelung des Radnabenmotors 3 auf einen Soll-Schlupfwert s-soll, z. B. s-soll = 0,15 (15 %), wobei hier vorteilhafterweise ein Übergang zwischen dem Startwert der Schlupfregelung, d.h. z.B. mit dem erkannten Wert der Schlupfschwelle von z.B. s-thr = 7 %, und dem einzuregelnden Sollwert von z. B. s-soll = 0,15 (15 %) vorgesehen sein kann. Der genaue Wert des Schlupf-Sollwertes s-soll kann hierbei gemäß Figur 3 in Abhängigkeit der Fahrsituation gewählt werden; hierbei kann insbesondere die erforderliche Reifenquerkraft FQ berücksichtigt werden. Somit wird eine maximale oder hohe Übertragung der z. B. zur Abbremsung führenden Längskraft bzw. Reifenlängskraft FL unter Aufrechterhaltung eines Potentials zur Querkraftübertragung gemäß der jeweiligen Fahrsituation ermöglicht. Hierzu kann die Antriebs-Steuereinrichtung 6 insbesondere auch Informationen über eine Kurvenfahrt, z. B. eine Gierrate ω oder eine gegebenenfalls einem entsprechendem Sensor direkt ermittelte Querbeschleunigung aq heranziehen. Weiterhin kann entsprechend der jeweilige Schräglaufwinkel α berücksichtigt werden, so dass ein Auswahlkriterium k2 für den Soll-Schlupf s-soll gebildet wird.

Somit erfolgt durch Ansteuerung des Radnabenmotors 3 eine Drehzahlregelung des Reifenschlupfes s auf den Soll-Schlupf s-soll, indem somit der Radnabenmotor zum Beschleunigen oder Abbremsen des Fahrzeugrades 2 angesteuert wird. Durch Messung des Antriebsstroms (Ansteuerstroms) I3 wird entsprechend das eingesteuerte Ist-Antriebsmoment M2 aktuell ermittelt.

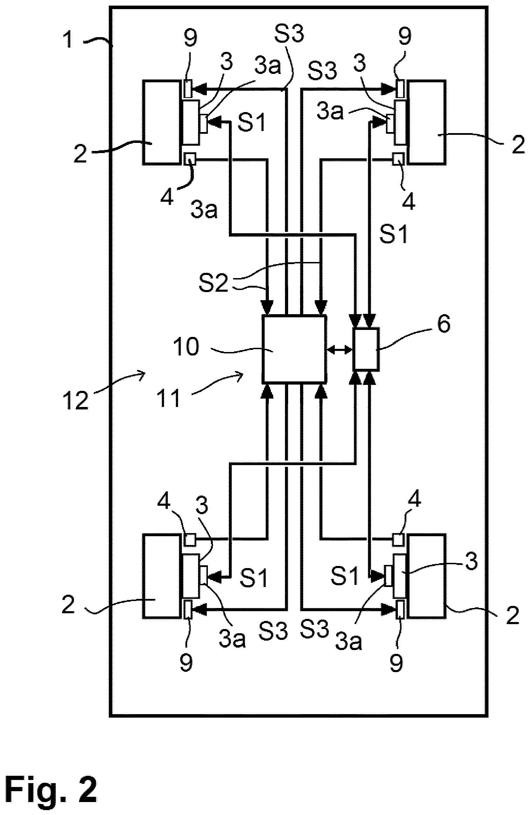

Gemäß Figur 2 kann der in Figur 1 gezeigte Aufbau entsprechend auch mittels der Antriebs-Steuereinrichtung 6 und der zentralen Brems-Steuereinrichtung 10 erfolgen, die die jeweiligen Radbremsen 9, z. B. pneumatische Radbremsen zum Bremsen einzelner Fahrzeugräder 2, direkt oder beim EBS insbesondere auch indirekt über Brems-Steuersignale S3 ansteuert. Zur Ansteuerung kann insbesondere eine elektropneumatische Ventileinrichtung, z. B. mit Relaisventilen und ABS-Ventilen, eingesetzt werden, damit die jeweiligen Radbremsen 9 nachfolgend Bremskräfte FB auf die einzelnen Fahrzeugräder 2 übertragen. Bei einem derartigen Aufbau geben somit die Raddrehzahlsensoren 4 in üblicher Weise die Raddrehzahlsignale n an die Brems-Steuereinrichtung 10 aus, die mit der zentralen Antriebs- Steuereinrichtung 6 in Datenverbindung steht, oder mit dieser integriert ist.

Somit kann in die Regelung auch entsprechend die Brems-Steuereinrichtung 10 eingebunden werden, wenn z. B. eine stärkere Abbremsung der Fahrzeugräder 2 mittels der als Reibbremsen ausgebildeten Radbremsen 9 erforderlich ist. Vorteilhafterweise erfolgt ansonsten die erfindungsgemäße Regelung allein durch Ansteuerung der Antriebseinrichtung, d. h. hier der Radnabenmotoren 3.

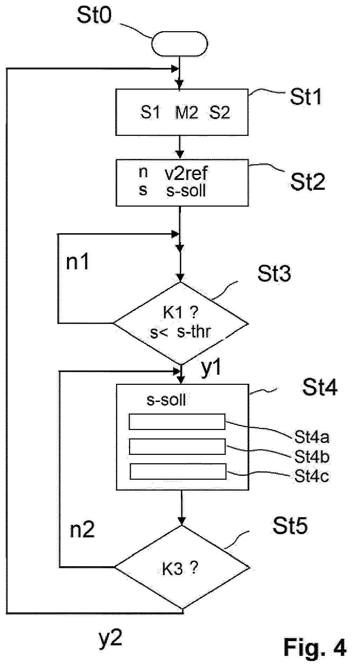

Gemäß dem Flussdiagramm der Figur 4 erfolgt somit nach dem Start in Schritt St0 in dem Schritt St1 die Einstellung oder Regelung eines Ist-Antriebsmomentes M2 an dem jeweiligen Fahrzeugrad 2, mittels Rekuperation.

Während und/oder nach dem Schritt St1 ist weiterhin gemäß Schritt St2 vorgesehen, die Raddrehzahlen n, den Radschlupf s und eine Referenzgeschwindigkeit v2ref zu bestimmen, sowie den Soll-Schlupf s-soll festzulegen oder abzurufen. Gemäß Schritt St3 wird fortlaufend überprüft, ob das Instabilitäts-Kriterium K1 erfüllt ist. Bei Vorliegen einer entsprechenden Instabilität wird gemäß Verzweigung y1 in Schritt St4 die Drehzahlregelung durchgeführt, um den Radschlupf s auf den Soll-Schlupf s-soll einzuregeln.

Hierbei wird gemäß Schritt St4 fortlaufend überprüft, ob das übertragene Ist-Antriebsmoment M2 bzw. die übertragenen Kräfte ein Endkriterium K3 zur Beendigung des Schlupf-Regelverfahrens erfüllen.

Als Endkriterium K3 kann entsprechend nicht mehr gemäß dem Kriterium k1 der Radschlupf bewertet werden, da dieser gerade als Regelgröße auf den Soll-Schlupfwert s-soll eingeregelt wird. Daher erfolgt die Bewertung des Endkriteriums k3 mittels des übertragenen Ist-Antriebsmomentes M2.

Das Endkriterium k3 ist vorteilhafterweise von der unterlagerten Antriebsmoment-Regelung oder -Steuerung abhängig, um somit zu bewerten, ob eine stabile Situation vorliegt und die überlagerte Schlupfregelung bereits keine relevanten Änderungen verursacht.

So kann das Endkriterium insbesondere bewerten, ob das angeforderte Sollmoment unterhalb des übertragenen Ist-Antriebsmomentes M2 liegt, d.h. M2 < x* M-soll.
wobei insbesondere auch x=1 angesetzt werden kann,
d.h. M2 < M-soll.

Falls dies der Fall ist, wird somit auf eine stabile Situation erkannt, und es wird gemäß Verzweigung y2 die Schlupfregelung beendet, d. h. gemäß der Darstellung der Figur 3 wiederum auf die unterlagerte Moment-Regelung, zurückgestellt,
bzw. wie hier gezeigt wird auf die Regelung des Ist-Antriebsmomentes M2 gemäß Schritt St1 zurückgestellt.

Gemäß weiteren bevorzugten Ausbildungen kann bei der Schlupf-Regelung in Schritt St4 der Radschlupf s in einem Schritt St4a um den Zielwert, d. h. den Schlupf-Sollwert s-soll, herum in inkrementellen Schritten variiert werden. Die durch die der Drehzahlregelung des Radnabenmotors 3 unterlagerte Drehmomentregelung kann in Schritt St4b die daraus folgende Drehmomentänderung des Radnabenmotors 3 messen. Der optimale Schlupfpunkt von z. B. 15 % wird dann in Schritt St4c adaptiv in Richtung höherer übertragener Drehmomente M2 bzw. Radkräfte verändert. Hierbei kann vorgesehen sein, eine obere Schlupfgrenze s-up nicht zu überschreiten, z.B. mit s-up = 22 %, sodass der Radschlupf s auf 22 % limitiert wird, was somit ein Adaptions-Endkriteriums k5 darstellt.

Bei der Ausbildung nach Fig. 2 kann die Antriebs-Regelung mit einer ABS-Regelung kombiniert werden. So kann die elektrische Abbremsung bzw. Rekuperation mit einer unterlagerten Reibbremsung mit konstantem Moment überlagert werden. Somit kann bei Blockierneigung eines Fahrzeugrades 2 eine Reibbremsung über die Radbremse 9 mittels eines ABS- Regelverfahrens über die zentrale Bremssteuereinrichtung 10 (ABS-Regeleinrichtung) geregelt werden unter gleichzeitigen Wirken des Radnabenmotors 3, insbesondere zur Rekuperation.

Gemäß einer weiteren Ausführungsform kann eine optimale Schlupfgeschwindigkeit über einen Konstantanteil der Gleitgeschwindigkeit ermittelt werden.

Der Soll-Schlupf s-soll kann von einem Fahrdynamik-System vorgegeben werden. So kann der Soll-Schlupf s-soll in Abhängigkeit des Querkraftbedarfs modifiziert und dann stärker limitiert werden, wenn entsprechende Seitenführungskräfte erforderlich sind. Diese können aus einem ESC-Fahrzeugbewegungsmodel entnommen werden.

Weiterhin kann gemäß einer Ausführungsform anstatt der gezeigten Raddrehzahlsensoren 4 die Drehzahl des Radnabenmotors 3, d.h. z.B. das Gebersignal verwendet werden. Wird der elektrische Antrieb 3 über ein Getriebe auf das Fahrzeugrad 2 eingegeben, so wird die jeweilige Getriebebesetzung zur Berechnung der Raddrehzahl n herangezogen.

### Bezugszeichenliste (Teil der Beschreibung)

- 1: Fahrzeug
- 2: Fahrzeugrad
- 3: Radnabenmotor
- 3a: Ansteuereinrichtung des Radnabenmotors 3
- 4: Raddrehzahlsensor
- 6: Antriebs-Steuereinrichtung
- 9: Radbremse, insbesondere pneumatische Radbremse
- 10: Brems-Steuereinrichtung
- 11: elektropneumatisches EBS-Bremssystem mit: zentraler Brems-Steuereinrichtung 10, pneumatischen Radbremsen 9 und über Brems-Steuersignale S3 angesteuerten elektropneumatischen Ventilen
- 12: Vorrichtung aus den Radnabenmotoren 3 mit Ansteuereinrichtungen 3a und der Antriebs-Steuereinrichtung 6

- FL: Reifenlängskraft
- FQ: Reifenquerkraft
- S1: Antriebs-Steuersignale
- S2: Motormoment-Informationssignal
- S3: Brems-Steuersignal
- n: Raddrehzahlsignal
- s: Radschlupf
- s-soll: Soll-Radschlupf
- s-thr: Grenzschlupf zur Bewertung der Instabilität
- s-thr-lo: unterer Grenzschlupf
- s-thr-up: oberer Grenzschlupf

- s-up: oberer Schlupfwert
- k1: Instabilitätskriterium
- k2: Auswahlkriterium zur Ermittlung des Soll-Schlupfwertes s-soll
- k3: Endkriterium

- v1: Fahrzeuggeschwindigkeit
- v1-ref: Fahrzeug-Referenzgeschwindigkeit
- v2-soll: Soll-Geschwindigkeit des Fahrzeugrades 2
- v2: Radgeschwindigkeit
- v2ref: Rad-Referenzgeschwindigkeit
- ω: Gierrate
- aq: Querbeschleunigung
- M2: Ist-Antriebsmoment, übertragenes Ist-Antriebsmoment
- M-soll: Soll-Antriebsmoment

- SLC: Schlupfregelung (slip loop control)
- nLC: Drehzahlregelung des Fahrzeugrades 2
- TC: Moment-Steuerung, Steuerung des Antriebsmoments M als Steuerung und/oder Regelung
- VLC: Fahrdynamik-Regelung

- St0 bis St5: Schritte des Verfahrens

## Patentansprüche

1. Verfahren zur Schlupfregelung eines über einen elektrischen Antrieb (3) angetriebenen Fahrzeugrades (2),
mit mindestens folgenden Schritten:
- Ansteuerung des elektrischen Antriebs (3) des Fahrzeugrades (2) mit einem Ist-Antriebsmoment (M2) in einer Moment-Steuerung (TC) in einem Moment-Steuerungsschritt (St1),
- Ermittlung einer Raddrehzahl (n) und eines Radschlupfes (s) des Fahrzeugrades (2) und **dadurch gekennzeichnet, dass** das Verfahren zur Schlupfregelung die folgenden zusätzlichen Schritte weiter beinhaltet:
Bewertung des Radschlupfes (s) durch ein Instabilitätskriterium (K1), ob eine Instabilität vorliegt (St3),
- bei Erkennung einer Instabilität direkter oder indirekter Übergang in eine Schlupfregelung (SLC) des Radschlupfes (s) auf einen Soll-Schlupf (s-soll) durch Ansteuerung des elektrischen Antriebs (3) (St4, überlagerter Schlupfregel-Schritt),
- Ermittlung, ob ein Endkriterium (K3) zur Beendigung der Schlupfregelung erfüllt ist (St5),
- falls das Endkriterium (K3) erfüllt ist, Rückführung zu der Moment-Steuerung (TC) in dem Moment-Steuerungsschritt (St1).

2. Verfahren nach Anspruch 1, **dadurch gekennzeichnet, dass**
- vor dem Moment-Steuerungsschritt (St1) ein Soll-Antriebsmoment-Ermittlungsschritt (St0-1) vorgesehen ist, in dem ein Soll-Antriebsmoment (M-soll) ermittelt wird, insbesondere in Abhängigkeit einer Fahrer-Eingabe, und
- in dem Moment-Steuerungsschritt (St1) bei der Ansteuerung des elektrischen Antriebs (3) des Fahrzeugrades (2) das ausgeübte Ist-Antriebsmoment (M2) gemessen und auf das Soll-Antriebsmoment (M-soll) eingestellt und/oder eingeregelt wird.

3. Verfahren nach Anspruch 1 oder 2, **dadurch gekennzeichnet, dass** die Moment-Steuerung (TC) als unterlagerte Antriebsmoment-Regelung zur Beschleunigung und/oder Abbremsung des Fahrzeugrades (2), z.B. auf eine Soll-Geschwindigkeit (v2-soll), vorgesehen ist.

4. Verfahren nach einem der vorherigen Ansprüche, **dadurch gekennzeichnet, dass** während der Schlupfregelung (SLC) zumindest zeitweise ein Abbremsen eines Fahrzeugrades (2) durch den elektrischen Antrieb (3) unter Rekuperation vorgesehen ist.

5. Verfahren nach einem der vorherigen Ansprüche, **dadurch gekennzeichnet, dass** das von dem elektrischen Antrieb (3) auf das Fahrzeugrad (2) ausgeübte Ist-Antriebsmoment (M2) durch Messung eines in den elektrischen Antrieb (3) eingegebenen Motorstroms (I3) ermittelt wird.

6. Verfahren nach einem der vorherigen Ansprüche, **dadurch gekennzeichnet, dass** als elektrischer Antrieb (3) ein Radnabenmotor (3) vorgesehen ist, der das Fahrzeugrad (2) beschleunigt und/oder das Fahrzeugrad (2) unter Rekuperation abbremst.

7. Verfahren nach einem der vorherigen Ansprüche, **dadurch gekennzeichnet, dass** mehrere Fahrzeugräder (2) jeweils über einen elektrischen Antrieb (3) schlupfgeregelt werden,
wobei die elektrischen Antriebe (3) über eine zentrale Antriebs- Steuereinrichtung (6) angesteuert werden, die Antriebs-Steuersignale (S1) zur Einstellung von Soll-Antriebsmomenten (M2-soll) ausgibt und Motormoment-Informationssignale (S2) über die auf die Fahrzeugräder (2) eingesteuerten Ist-Antriebsmomente (M2) aufnimmt.

8. Verfahren nach einem der vorherigen Ansprüche, **dadurch gekennzeichnet, dass** der Radschlupf (s) des Fahrzeugrades (2) ermittelt wird aus
einerseits der ermittelten Raddrehzahl (n) oder einer AntriebsDrehzahl (n3) des Radnabenmotors (3) und
andererseits einer Rad-Referenzgeschwindigkeit (v2ref) oder einer Fahrzeug-Referenzgeschwindigkeit (v1-ref).

9. Verfahren nach einem der vorherigen Ansprüche, **dadurch gekennzeichnet, dass** der Soll-Schlupf (s-soll) auf Grundlage eines Kraft-Schlupfmodells (Fig. 3) unter Berücksichtigung zu übertragender Rad-Querkräfte (FQ) ausgewählt wird.

10. Verfahren nach einem der vorherigen Ansprüche, **dadurch gekennzeichnet, dass** der Soll-Schlupf (s-soll) der Schlupfregelung ermittelt wird auf Grundlage eines Auswahlkriteriums (K2), insbesondere unter Heranziehung von aktuellen oder beabsichtigten Querkräften (FQ) des Fahrzeugrades (2) und/oder eines Schräglaufwinkels (α).

11. Verfahren nach einem der vorherigen Ansprüche, **dadurch gekennzeichnet, dass** der Soll-Schlupf (s-soll) von einer Fahrdynamik-Regelung (VLC), ermittelt und vorgegeben wird.

12. Verfahren nach einem der vorherigen Ansprüche, **dadurch gekennzeichnet, dass** bei dem Instabilitäts-Kriterium (k1) der Radschlupf (s) des Fahrzeugrades (2) verglichen wird mit mindestens einem Grenz-Schlupf (s-thr) und bei Überschreiten des Grenz-Schlupfes (s-thr) eine Instabilität erkannt wird.

13. Verfahren nach Anspruch 12, **dadurch gekennzeichnet, dass** der Grenz-Schlupf (s-thr) kleiner als der Soll-Schlupf (s-soll) ist, z.B. mit Grenz-Schlupf (s-thr) gleich 7 Prozent und Soll-Schlupf (s-soll) gleich 15 Prozent.

14. Verfahren nach Anspruch 12 oder 13, **dadurch gekennzeichnet, dass** bei Erkennung einer Instabilität
zunächst bei Überschreiten eines unteren Grenzschlupfs (s-thr-lo) des Radschlupfes (s) ein Übergang auf eine Drehzahlregelung (nLC) des Fahrzeugrades (2) erfolgt und
bei Überschreiten eines oberen Grenzschlupfs (s-thr-lo) ein Übergang auf die Schlupfregelung (SLC) des Fahrzeugrades (2) erfolgt, bei der der Radschlupf (s) auf den Soll-Schlupf (s-soll) geregelt wird (St4, überlagerter Schlupfregel-Schritt).

15. Verfahren nach einem der vorherigen Ansprüche, **dadurch gekennzeichnet, dass** als Endkriterium (K3) das während der Schlupfregelung (SLC) übertragene Ist-Antriebsmoment (M2) bewertet wird.

16. Verfahren nach Anspruch 15 **dadurch gekennzeichnet, dass** das Ist-Antriebsmoment (M2) verglichen wird mit dem in der unterlagerten Drehmomentsteuerung (St1) vorgegebenen Soll-Antriebsmoment (M-soll) (M2 < M-soll),
wobei in dem Fall, dass das übertragene Ist-Antriebsmoment (M2) das in der unterlagerten Moment-Steuerung (TC) vorgegebenen Soll-Antriebsmoment (M-soll) unterschreitet, das Endkriterium (k3) erfüllt ist (St5).

17. Verfahren nach einem der vorherigen Ansprüche, **dadurch gekennzeichnet, dass** bei der Schlupfregelung (St4) eine Anpassung des Soll-Schlupfes (s-soll) erfolgt, indem
- nach initialer Einstellung des Soll-Schlupfes (s-soll) nachfolgend ein aktueller Soll-Schlupf (s-soll-ink) durch Abweichung in inkrementellen Schritten (Δs) festgelegt wird und
- die hierbei erzeugte Änderung des von dem elektrischen Antrieb (3) übertragenen Antrieb-Momentes (M2) ermittelt wird,
- wobei bei Feststellen einer Erhöhung des übertragenen Antrieb-Momentes (M2) der aktuelle Soll-Schlupf (s-soll-ink) als neuer Soll-Schlupf (s-soll) festgelegt wird.

18. Verfahren nach Anspruch 17, **dadurch gekennzeichnet, dass** die Anpassung des Soll-Schlupfes (s-soll) beendet oder begrenzt wird in Abhängigkeit eines weiteren Adaptions-Endkriteriums (k5), z.B. bei Erreichen einer oberen Schlupfgrenze (s-up), z.B. 22 Prozent.

19. Verfahren nach einem der vorherigen Ansprüche, **dadurch gekennzeichnet, dass** weiterhin gleichzeitig ein Einsatz von Radbremsen, insbesondere Reibbremsen (9) vorgesehen ist.

20. Verfahren nach einem der vorherigen Ansprüche, **dadurch gekennzeichnet, dass** Raddrehzahlsignale (n) ermittelt werden durch Raddrehzahlsensoren (4) und/oder Ermittlung einer Motor-Drehzahl (n3) der elektrischen Maschine, z.B. Radzahlmotors (3).

21. Vorrichtung (12) zur Schlupfregelung eines Fahrzeugrades (2), die aufweist:
einen elektrischen Antrieb (3) zur Übertragung von beschleunigenden und abbremsenden Ist-Antriebsmomenten (M2) auf das Fahrzeugrad (2),
eine als Teil des elektrischen Antriebs (3) oder zusätzlich vorgesehene Ansteuereinrichtung (3a) zur Bestromung des elektrischen Antriebs (3),
eine zentrale Antriebs-Steuereinrichtung (6) zur Ansteuerung der Ansteuereinrichtung (3a) über Antriebs-Steuersignale (S1) und zur Aufnahme von Motormoment-Informationssignalen (S2) über das von der Ansteuereinrichtung (3a) aktuell eingesteuerte Ist-Antriebsmoment (M2),
**dadurch gekennzeichnet, dass** die zentrale Antriebs-Steuereinrichtung (6) ausgelegt oder eingerichtet ist, ein Verfahren nach einem der vorherigen Ansprüche durchzuführen.

22. Fahrzeug mit einer Vorrichtung (12) nach Anspruch 21 und mindestens einem durch die Vorrichtung (12) angesteuerten Fahrzeugrad (2).

## Claims

1. Method for slip control of a vehicle wheel (2) driven via an electric drive (3), comprising at least the following steps:
- actuating the electric drive (3) of the vehicle wheel (2) with an actual drive torque (M2) in torque control (TC) in a torque control step (St1),
- determining a wheel speed (n) and a wheel slip (s) of the vehicle wheel (2), and **characterized in that** the method for slip control further includes the following additional steps:
- evaluating the wheel slip (s) as to whether an instability is present (St3) by means of an instability criterion (K1),
- when an instability is detected, directly or indirectly transitioning into slip control (SLC) of the wheel slip (s) to a setpoint slip (s-soll) by actuating the electric drive (3) (St4, superimposed slip control step),
- determining whether an end criterion (K3) for terminating the slip control is met (St5),
- if the end criterion (K3) is met, returning to the torque control (TC) in the torque control step (St1).

2. Method according to claim 1, **characterized in that**
- before the torque control step (St1), a setpoint drive torque determination step (StO-1) is provided, in which a setpoint drive torque (M-soll) is determined, in particular on the basis of a driver input, and
- in the torque control step (St1), when the electric drive (3) of the vehicle wheel (2) is actuated, the applied actual drive torque (M2) is measured and set and/or adjusted to the setpoint drive torque (M-soll).

3. Method according to either claim 1 or claim 2, **characterized in that** the torque control (TC) is provided as subordinate drive torque control for accelerating and/or braking the vehicle wheel (2), for example to a setpoint speed (v2-soll).

4. Method according to any of the preceding claims, **characterized in that** during the slip control (SLC), a vehicle wheel (2) is braked at least temporarily by the electric drive (3) with recuperation.

5. Method according to any of the preceding claims, **characterized in that** the actual drive torque (M2) applied to the vehicle wheel (2) by the electric drive (3) is determined by measuring a motor current (I3) input into the electric drive (3).

6. Method according to any of the preceding claims, **characterized in that** a wheel hub motor (3) is provided as an electrical drive (3), which wheel hub motor accelerates the vehicle wheel (2) and/or brakes the vehicle wheel (2) with recuperation.

7. Method according to any of the preceding claims, **characterized in that** a plurality of vehicle wheels (2) are each slip-controlled via an electric drive (3), the electric drives (3) being controlled via a central drive control device (6), which outputs drive control signals (S1) for setting setpoint drive torques (M2-soll) and receives motor torque information signals (S2) regarding the actual drive torques (M2) introduced at the vehicle wheels (2).

8. Method according to any of the preceding claims, **characterized in that** the wheel slip (s) of the vehicle wheel (2) is determined from the determined wheel speed (n) or a drive speed (n3) of the wheel hub motor (3), and
from a wheel reference speed (v2ref) or a vehicle reference speed (v1-ref).

9. Method according to any of the preceding claims, **characterized in that** the setpoint slip (s-soll) is selected on the basis of a force slip model (Fig. 3), taking into account wheel lateral forces (FQ) to be transmitted.

10. Method according to any of the preceding claims, **characterized in that** the setpoint slip (s-soll) of the slip control is determined on the basis of a selection criterion (K2), in particular using current or intended lateral forces (FQ) of the vehicle wheel (2) and/or a slip angle (α).

11. Method according to any of the preceding claims, **characterized in that** the setpoint slip (s-soll) is determined and specified by a vehicle dynamics controller (VLC).

12. Method according to any of the preceding claims, **characterized in that** in the case of the instability criterion (k1), the wheel slip (s) of the vehicle wheel (2) is compared with at least one threshold slip (s-thr) and an instability is detected when the threshold slip (s-thr) is exceeded.

13. Method according to claim 12, **characterized in that** the threshold slip (s-thr) is smaller than the setpoint slip (s-soll), e. g., with threshold slip (s-thr) being equal to 7 percent and setpoint slip (s-soll) equal to 15 percent.

14. Method according to either claim 12 or claim 13, **characterized in that** when an instability is detected,
a transition to speed control (nLC) of the vehicle wheel (2) takes place first when a lower threshold slip (s-thr-lo) of the wheel slip (s) is exceeded, and
a transition to slip control (SLC) of the vehicle wheel (2) takes place when an upper threshold slip (s-thr-lo) is exceeded, in which slip control the wheel slip (s) is controlled to the setpoint slip (s-soll) (St4, superimposed slip control step).

15. Method according to any of the preceding claims, **characterized in that** the actual drive torque (M2) transmitted during the slip control (SLC) is evaluated as the end criterion (K3).

16. Method according to claim 15 **characterized in that** the actual drive torque (M2) is compared with the setpoint drive torque (M-soll) specified in the subordinate torque control (St1) (M2 < M-soll),
wherein in the case that the transmitted actual drive torque (M2) falls below the setpoint drive torque (M-soll) specified in the subordinate torque control (TC), the end criterion (k3) is met (St5).

17. Method according to any of the preceding claims, **characterized in that** an adaptation of the setpoint slip (s-soll) takes place in the slip control (St4), **in that**
- after initial setting of the setpoint slip (s-soll), a current setpoint slip (s-soll-ink) is subsequently defined by deviation in incremental steps (Δs), and
- the change in the drive torque (M2) transmitted by the electric drive (3) that is generated thereby is determined,
- the current setpoint slip (s-soll-ink) being defined as a new setpoint slip (s-soll) if an increase in the transmitted drive torque (M2) is established.

18. The method according to claim 17, **characterized in that** the adaptation of the setpoint slip (s-soll) is terminated or limited on the basis of a further adaptation end criterion (k5), e. g., when an upper slip threshold (s-up) is reached, for example 22 percent.

19. Method according to any of the preceding claims, **characterized in that** wheel brakes, in particular friction brakes (9), are also used at the same time.

20. Method according to any of the preceding claims, **characterized in that** wheel speed signals (n) are determined by wheel speed sensors (4) and/or by determination of a motor speed (n3) of the electrical machine, e.g. wheel number motor (3).

21. Device (12) for slip control of a vehicle wheel (2), comprising:
an electric drive (3) for transmitting accelerating and braking actual drive torques (M2) to the vehicle wheel (2),
a control device (3a) for energizing the electric drive (3), which is provided additionally or as part of the electrical drive (3),
a central drive control device (6) for controlling the control device (3a) via drive control signals (S1) and for receiving motor torque information signals (S2) regarding the actual drive torque (M2) currently being controlled by the control device (3a),
**characterized in that**
the central drive control device (6) is designed or configured to carry out a method according to any of the preceding claims.

22. Vehicle comprising a device (12) according to claim 21 and at least one vehicle wheel (2) controlled by the device (12).

## Revendications

1. Procédé permettant la régulation du patinage d'une roue de véhicule (2) entraînée par l'intermédiaire d'un entraînement électrique (3), comportant au moins les étapes suivantes :
- commande de l'entraînement électrique (3) de la roue de véhicule (2) avec un couple d'entraînement réel (M2) dans une commande de couple (TC) dans une étape de commande de couple (St1),
- détermination d'une vitesse de rotation de roue (n) et d'un patinage de roue (s) de la roue de véhicule (2) et **caractérisé en ce que** le procédé permettant la régulation du patinage comprend en outre les étapes supplémentaires suivantes :
évaluation du patinage de roue (s) par un critère d'instabilité (K1) pour savoir si une instabilité est présente (St3),
- lors de la détection d'une instabilité, transition directe ou indirecte dans une régulation du patinage (SLC) du patinage de roue (s) sur un patinage de consigne (s-soll) par commande de l'entraînement électrique (3) (St4, étape de régulation du patinage superposée),
- détermination du fait de savoir si un critère final (K3) permettant d'arrêter la régulation du patinage est satisfait (St5),
- si le critère final (K3) est satisfait, retour à la commande de couple (TC) dans l'étape de commande de couple (St1).

2. Procédé selon la revendication 1, **caractérisé en ce que**
- avant l'étape de commande de couple (St1), une étape de détermination de couple d'entraînement de consigne (St0-1) est prévue, dans laquelle un couple d'entraînement de consigne (M-soll) est déterminé, en particulier en fonction d'une entrée de conducteur, et
- dans l'étape de commande de couple (St1), lors de la commande de l'entraînement électrique (3) de la roue de véhicule (2), le couple d'entraînement réel (M2) exercé est mesuré et réglé et/ou régulé sur le couple d'entraînement de consigne (M-soll).

3. Procédé selon la revendication 1 ou 2, **caractérisé en ce que** la commande de couple (TC) est prévue en tant que régulation de couple d'entraînement secondaire pour l'accélération et/ou le freinage de la roue de véhicule (2), par exemple à une vitesse de consigne (v2-soll).

4. Procédé selon l'une des revendications précédentes,
**caractérisé en ce que,** pendant la régulation du patinage (SLC), un freinage d'une roue de véhicule (2) par l'entraînement électrique (3) avec récupération est prévu au moins temporairement.

5. Procédé selon l'une des revendications précédentes,
**caractérisé en ce que** le couple d'entraînement réel (M2) exercé par l'entraînement électrique (3) sur la roue de véhicule (2) est déterminé par mesure d'un courant moteur (I3) introduit dans l'entraînement électrique (3).

6. Procédé selon l'une des revendications précédentes,
**caractérisé en ce qu'**un moteur de moyeu de roue (3), lequel accélère la roue de véhicule (2) et/ou freine la roue de véhicule (2) avec récupération, est prévu comme entraînement électrique (3).

7. Procédé selon l'une des revendications précédentes,
**caractérisé en ce que** plusieurs roues de véhicule (2) sont régulées en termes de patinage respectivement par l'intermédiaire d'un entraînement électrique (3), dans lequel les entraînements électriques (3) sont commandés par l'intermédiaire d'un appareil de commande d'entraînement central (6) qui envoie des signaux de commande d'entraînement (S1) permettant le réglage de couples d'entraînement de consigne (M2-soll) et reçoit des signaux d'information de couple moteur (S2) par l'intermédiaire des couples d'entraînement réels (M2) réglés sur les roues de véhicule (2).

8. Procédé selon l'une des revendications précédentes,
**caractérisé en ce que** le patinage de roue (s) de la roue de véhicule (2) est déterminé à partir d'une part de la vitesse de rotation de roue (n) déterminée ou d'une vitesse de rotation d'entraînement (n3) du moteur de moyeu de roue (3) et
d'autre part d'une vitesse de référence de roue (v2ref) ou d'une vitesse de référence de véhicule (v1-ref).

9. Procédé selon l'une des revendications précédentes,
**caractérisé en ce que** le patinage de consigne (s-soll) est sélectionné sur la base d'un modèle de patinage de force (Fig. 3) en tenant compte de forces transversales (FQ) de roue à transmettre.

10. Procédé selon l'une des revendications précédentes,
**caractérisé en ce que** le patinage de consigne (s-soll) de la régulation du patinage est déterminé sur la base d'un critère de sélection (K2), en particulier en utilisant des forces transversales (FQ) actuelles ou prévues de la roue de véhicule (2) et/ou un angle de dérive (α).

11. Procédé selon l'une des revendications précédentes,
**caractérisé en ce que** le patinage de consigne (s-soll) est déterminé et prédéfini par une régulation de la dynamique de conduite (VLC).

12. Procédé selon l'une des revendications précédentes,
**caractérisé en ce que,** pour le critère d'instabilité (k1), le patinage de roue (s) de la roue de véhicule (2) est comparé avec au moins un patinage limite (s-thr) et, en cas de dépassement du patinage limite (s-thr), une instabilité est détectée.

13. Procédé selon la revendication 12, **caractérisé en ce que** le patinage limite (s-thr) est inférieur au patinage de consigne (s-soll), par exemple avec le patinage limite (s-thr) égal à 7 pour cent et le patinage de consigne (s-soll) égal à 15 pour cent.

14. Procédé selon la revendication 12 ou 13, **caractérisé en ce que,** lors de la détection d'une instabilité,
tout d'abord, en cas de dépassement d'un patinage limite inférieur (s-thr-lo) du patinage de roue (s), une transition vers une régulation de vitesse de rotation (nLC) de la roue de véhicule (2) est effectuée et
en cas de dépassement d'un patinage limite supérieur (s-thr-lo), une transition vers la régulation du patinage (SLC) de la roue de véhicule (2) est effectuée, lors de laquelle le patinage de roue (s) est régulé sur le patinage de consigne (s-soll) (St4, étape de régulation du patinage superposée).

15. Procédé selon l'une des revendications précédentes,
**caractérisé en ce que** le couple d'entraînement réel (M2) transmis pendant la régulation du patinage (SLC) est évalué comme critère final (K3).

16. Procédé selon la revendication 15 **caractérisé en ce que** le couple d'entraînement réel (M2) est comparé avec le couple d'entraînement de consigne (M-soll) prédéfini dans la commande de couple de rotation secondaire (St1) (M2 < M-soll),
dans lequel, dans le cas où le couple d'entraînement réel (M2) transmis est inférieur au couple d'entraînement de consigne (M-soll) prédéfini dans la commande de couple (TC) secondaire, le critère final (k3) est satisfait (St5).

17. Procédé selon l'une des revendications précédentes,
**caractérisé en ce que,** lors de la régulation du patinage (St4), une adaptation du patinage de consigne (s-soll) est effectuée par le fait que
- après le réglage initial du patinage de consigne (s-soll), un patinage de consigne actuel (s-soll-ink) est ensuite spécifié par une déviation par étapes incrémentielles (Δs) et
- la variation résultante du couple d'entraînement (M2) transmis par l'entraînement électrique (3) est déterminée,
- dans lequel, lors d'une constatation d'une augmentation du couple d'entraînement (M2) transmis, le patinage de consigne actuel (s-soll-ink) est spécifié comme nouveau patinage de consigne (s-soll).

18. Procédé selon la revendication 17, **caractérisé en ce que** l'adaptation du patinage de consigne (s-soll) est arrêtée ou limitée en fonction d'un autre critère final d'adaptation (k5), par exemple lorsqu'une limite de patinage supérieure (s-up), par exemple 22 pour cent, est atteinte.

19. Procédé selon l'une des revendications précédentes,
**caractérisé en ce qu'**une utilisation de freins de roue, en particulier de freins à friction (9), est en outre prévue simultanément.

20. Procédé selon l'une des revendications précédentes,
**caractérisé en ce que** des signaux de vitesse de rotation de roue (n) sont déterminés par des capteurs de vitesse de rotation de roue (4) et/ou la détermination d'une vitesse de rotation de moteur (n3) de la machine électrique, par exemple du moteur de nombre de roues (3).

21. Dispositif (12) permettant la régulation du patinage d'une roue de véhicule (2), lequel présente :
un entraînement électrique (3) permettant de transmettre des couples d'entraînement réels (M2) qui accélèrent et qui freinent à la roue de véhicule (2),
un appareil de commande (3a) prévu en tant que partie de l'entraînement électrique (3) ou en supplément et permettant d'alimenter l'entraînement électrique (3),
un appareil de commande d'entraînement central (6) permettant de commander l'appareil de commande (3a) par l'intermédiaire de signaux de commande d'entraînement (S1) et permettant de recevoir des signaux d'information de couple moteur (S2) par l'intermédiaire du couple d'entraînement réel (M2) commandé actuellement par l'appareil de commande (3a),
**caractérisé en ce que**
l'appareil de commande d'entraînement central (6) est adapté ou configuré pour mettre en oeuvre un procédé selon l'une des revendications précédentes.

22. Véhicule comportant un dispositif (12) selon la revendication 21 et au moins une roue de véhicule (2) commandée par le dispositif (12).
